# EUROPEAN PATENT APPLICATION

(11) **EP 3 605 136 A1**
(43) Date of publication of application: **05.02.2020**
(21) Application number: 18770971.2
(22) Date of filing: 13.03.2018
(51) Int. Cl.: G01S 7/40, B60R 21/00, G01S 7/497, G08G 1/097

(54) **SENSOR MODULE, SENSOR SYSTEM, AND METHOD FOR INSTALLING SENSOR SYSTEM IN VEHICLE**

(30) Priority: 21.03.2017 JP 2017054102
(71) Applicant: Koito Manufacturing Co., Ltd., Tokyo 108-8711 (JP)
(72) Inventor: FUSHIMI Yoshiaki, Shizuoka-shi Shizuoka 424-8764 (JP); KASABA Yusuke, Shizuoka-shi Shizuoka 424-8764 (JP)
(74) Representative: Grünecker Patent- und Rechtsanwälte PartG mbB
(86) International application number: PCT/JP2018/009718
(87) International publication number: WO 2018/173855

(57) **Abstract**

A first LiDAR sensor (41) is configured to sense external information of a vehicle. A first support member (43) supports the first LiDAR sensor (41) and a first acceleration sensor (42). A memory (17) is configured to store a first output value of the first acceleration sensor (42) at a first time point. A processor (16) is configured to acquire a difference between the first output value and a second output value of the second acceleration sensor (42) at a second time point.

## Description

### Technical Field

The presently disclosed subject matter relates to a sensor module adapted to be installed in a vehicle, a sensor system adapted to be installed in a vehicle, and a method of installing the sensor system in a vehicle.

### Background Art

In order to realize driving support for a vehicle, it is necessary to mount a sensor for acquiring external information of the vehicle on a vehicle body. Different types of sensors may be used to more accurately acquire the external information. Examples of such sensors may include a camera and a LiDAR (Light Detection and Ranging) sensor (see, for example, Patent Document 1).

### Prior Art Document

### Patent Document

Patent Document 1: Japanese Patent Publication No. 2010-185769A

### Summary

### Technical Problem

After the sensor as described above is installed in the vehicle body, it is necessary to adjust a sensing reference position of the sensor with respect to the vehicle body. With the advancement of the driving support technology, the number of sensors tends to increase. As the number of sensors increases, the burden of adjustment work increases.

It is an object of the presently disclosed subject matter to reduce the burden of an operation of adjusting the sensing reference position of the sensor after the sensor is installed in the vehicle.

### Solution to Problem

In order to achieve the above object, according to one aspect of the presently disclosed subject matter, there is provided a sensor module adapted to be installed in a vehicle, comprising:
a sensor configured to sense external information of the vehicle;
a support member supporting the sensor, and
an acceleration sensor supported on the support member.

According to such a configuration, it is possible to acquire information on the attitude of the sensor with respect to the vehicle after the sensor module is installed in the vehicle through the signal outputted from the acceleration sensor. By using the signal as outputted, automation of the adjustment of the attitude of the sensor as well as the correction of the sensing result by the sensor can be made easier. Therefore, it is possible to reduce the burden of adjusting the sensing reference positions of the respective sensors after they are installed in the vehicle.

In order to achieve the above object, according to one aspect of the presently disclosed subject matter, there is provided a sensor system adapted to be installed in a vehicle, comprising:
a sensor configured to sense external information of the vehicle;
a support member supporting the sensor;
an acceleration sensor supported on the support member;
a memory configured to store a first output value of the acceleration sensor at a first time point; and
a processor configured to acquire a difference between the first output value and a second output value of the acceleration sensor at a second time point.

According to such a configuration, when a deviation occurs in the attitude of the sensor between the first time point and the second time point, the deviation amount can be grasped through the signal outputted from the acceleration sensor. By using the signal as outputted, automation of the adjustment of the attitude of the sensor in view of the deviation amount as well as the correction of the sensing result by the sensor can be made easier. Therefore, it is possible to reduce the burden of adjusting the sensing reference positions of the respective sensors after they are installed in the vehicle.

Examples of the first time point may include a time point before the sensor system is installed in the vehicle. Examples of the second time point may include a time point after the sensor system is installed in the vehicle.

Accordingly, in order to achieve the above object, there is provided a method of installing the above sensor system in a vehicle, comprising:
a first step of causing the memory to store the first output value at the first time point that is before the sensor system is installed in the vehicle; and
a second step of causing the processor to acquire the difference between the first output value and the second output value at the second time point that is after the sensor system is installed in the vehicle.

In the above method, the first step may be performed by a first entity, and the second step may be performed by a second entity that is different from the first entity.

Examples of the first entity may include a manufacturer of the sensor system. Examples of the second entity may include a manufacturer who assembles a vehicle with the sensor system as a part. In this case, it is possible to reduce the burden on the second entity to adjust the sensing reference position of the sensor.

The above sensor system may be configured so as to comprise an adjustment mechanism configured to perform adjustment of at least one of a position and an attitude of the sensor. Here, the processor is configured to cause the adjustment mechanism to perform the adjustment based on the difference.

According to such a configuration, when a deviation occurs in the attitude of the sensor between the first time point and the second time point, the adjustment operation for cancelling the deviation can be automated. Therefore, even if the number of the sensors is increased, it is possible to reduce the burden of adjusting the sensing reference position of the sensor after the sensor system is installed in the vehicle.

Alternatively, the above sensor system may be configured so as to comprise a corrector configured to perform correction of the external information acquired by the sensor. Here, the processor is configured to cause the corrector to perform the correction based on the difference.

According to such a configuration, mechanism for adjusting at least one of the position and the attitude of the sensor can be omitted. Therefore, it is possible not only to reduce the burden of adjusting the sensing reference positions of the respective sensors after the sensor system is installed in the vehicle, but also to suppress an increase in size and weight of the sensor system.

The above sensor system may be configured so as to comprise a housing commonly housing the sensor, the support member, and the acceleration sensor. Here, the processor is supported by the housing.

The functions of the processor may be realized by a control device installed in the vehicle. However, according to the above configuration, the processing load of the control device can be reduced.

In this case, the sensor system may be configured such that the memory and the processor are supported by the housing.

With such a configuration, the sensor, the acceleration sensor, the memory, and the processor can be easily modularized.

The above sensor system may be configured so as to comprise:
a light source;
a light source adjustment mechanism configured to adjust at least one of a position and an attitude of the light source; and
a housing commonly housing the sensor, the support member, the acceleration sensor, the light source, and at least a portion of the light source adjustment mechanism.

From the viewpoint of efficiently acquiring information around the vehicle and from the viewpoint of design, it is desired to dispose a sensor for acquiring information outside the vehicle in the vicinity of the lamp devices disposed at the four corners of the vehicle. According to the above-described configuration, integration of the lamp device and the sensor system can be made easy to meet the above-described demand.

The sensor may include at least one of a LiDAR sensor, an ultrasonic wave sensor, a millimeter wave radar, and a camera.

### Brief Description of the Drawings

FIG. 1 illustrates a position of a sensor system in a vehicle.
FIG. 2 illustrates a configuration of a sensor system according to a first embodiment.
FIG. 3 illustrates a configuration of a sensor system according to a second embodiment.
FIG. 4 illustrates a configuration of a sensor system according to a third embodiment.
FIG. 5 illustrates a configuration of a sensor system according to a fourth embodiment.
FIG. 6 illustrates configurations of respective sensor modules in the sensor system of FIG. 5.
FIG. 7 illustrates a configuration of a sensor system according to a fifth embodiment.
FIG. 8 illustrates configurations of respective sensor modules in the sensor system of FIG. 7.

### Description of Embodiments

Examples of embodiments will be described below in detail with reference to the accompanying drawings. In each of the drawings used in the following descriptions, the scale is appropriately changed in order to make each of the members have a recognizable size.

In the accompanying drawings, an arrow F represents a forward direction of the illustrated structure. An arrow B represents a rearward direction of the illustrated structure. An arrow L represents a leftward direction of the illustrated structure. An arrow R represents a rightward direction of the illustrated structure. The terms of "left" and "right" used in the following descriptions represent the left-right directions as viewed from the driver's seat. In the accompanying drawings, the term "up-down direction" corresponds to the direction perpendicular to the drawing sheet.

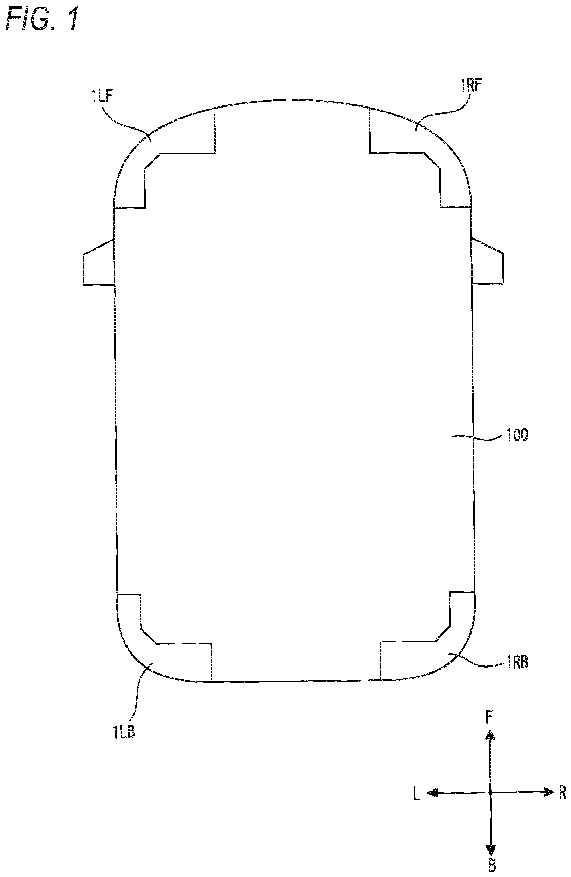

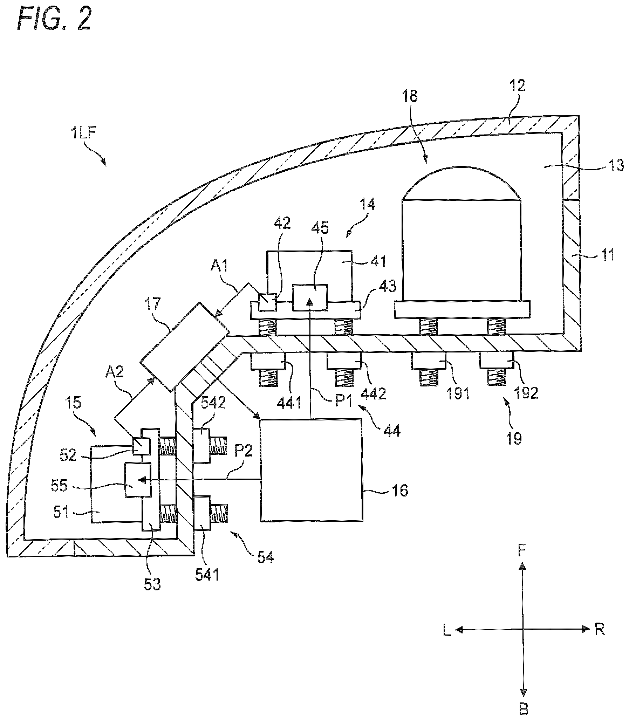

As illustrated in FIG. 1, a left front sensor system 1LF according to a first embodiment is mounted on a left front corner portion of a vehicle 100. FIG. 2 schematically illustrates a configuration of the left front sensor system 1LF.

The left front sensor system 1LF is housed in a lamp chamber 13 defined by a housing 11 and a translucent member 12.

The left front sensor system 1LF comprises a first sensor module 14. The first sensor module 14 includes a first LiDAR sensor 41, a first acceleration sensor 42, a first support member 43, a first screw mechanism 44, and a first actuator 45.

The first LiDAR sensor 41 has a configuration for emitting non-visible light and a configuration for detecting return light as a result of the non-visible light being reflected by at least an object present in front of the vehicle 100. The front of the vehicle 100 is an example of the outside of the vehicle. The first LiDAR sensor 41 may include a scan mechanism that changes the emission direction (i.e., the sensing direction) as required to sweep the non-visible light. In the present embodiment, infrared light having a wavelength of 905 nm is used as the non-visible light.

The first LiDAR sensor 41 can acquire the distance to the object associated with the returned light, for example, based on the time period from the time when the non-visible light is emitted in a certain direction to the time when the returned light is sensed. Further, by accumulating such distance data in association with the sensing position, it is possible to acquire information as to the shape of the object associated with the returned light. Additionally or alternatively, information as to an attribute such as the material of the object associated with the returned light can be acquired based on the difference in wavelength between the emitted light and the returned light. Additionally or alternatively, information about the color of the object, such as a white line on the road surface, can be acquired, for example, based on the difference in reflectivity of the returned light from the road surface.

That is, the first LiDAR sensor 41 is a sensor that senses information of at least an area ahead of the vehicle 100. The first LiDAR sensor 41 outputs a signal corresponding to an attribute of the sensed return light, such as intensity and wavelength. The above-mentioned information is acquired by appropriately processing the signal outputted from the first LiDAR sensor 41 by an information processing section (not illustrated). The information processing section may be provided in the left front sensor system 1LF or may be installed in the vehicle 100.

The first acceleration sensor 42 is supported by the first support member 43 together with the first LiDAR sensor 41. The first acceleration sensor 42 outputs a signal A1 corresponding to the attitude of the first support member 43, that is, the attitude of the first LiDAR sensor 41.

The first screw mechanism 44 is a mechanism for adjusting the attitude of the first LiDAR sensor 41 with respect to the housing 11 by adjusting the attitude of the first support member 43. The first screw mechanism 44 includes a first horizontal adjusting screw 441 and a first vertical adjusting screw 442.

The first horizontal adjusting screw 441 extends through the housing 11. The first horizontal adjusting screw 441 is connected to the first support member 43 via a joint (not illustrated). A head portion of the first horizontal adjusting screw 441 is disposed outside the housing 11. When the head portion is rotated by a predetermined tool, the rotation of the first horizontal adjusting screw 441 is converted into a movement for changing the attitude of the first support member 43 in the horizontal plane (in the plane including a front-rear direction and a left-right direction in the figure) by the above-described joint. It should be noted that the "horizontal plane" used herein need not coincide with a strict horizontal plane. Since the construction itself of the joint is well known, a detailed description thereof will be omitted.

The first vertical adjusting screw 442 extends through the housing 11. The first vertical adjusting screw 442 is connected to the first support member 43 via a joint (not illustrated). A head portion of the first vertical adjusting screw 442 is disposed outside the housing 11. When the head portion is rotated by a predetermined tool, the rotation of the first vertical adjusting screw 442 is converted by the joint into a motion for changing the posture of the first support member 43 in a vertical plane (in a plane including the front-rear direction and the up-down direction in the figure). It should be noted that the "vertical plane" used herein need not coincide with a strict vertical plane. Since the construction itself of the joint is well known, a detailed description thereof will be omitted.

The first actuator 45 is a device for adjusting a sensing reference position of the LiDAR sensor 41. The first actuator 45 is disposed in the lamp chamber 13 and is coupled to the first LiDAR sensor 41.

The left front sensor system 1LF comprises a second sensor module 15. The second sensor module 15 includes a second LiDAR sensor 51, a second acceleration sensor 52, a second support member 53, a second screw mechanism 54, and a second actuator 55.

The second LiDAR sensor 51 has a configuration for emitting non-visible light and a configuration for sensing returned light as a result of the non-visible light being reflected by at least an object present in the left side of the vehicle 100. The left side of the vehicle 100 is an example of the outside of the vehicle. The second LiDAR sensor 51 may include a scan mechanism that changes the emission direction (i.e., the sensing direction) as required to sweep the non-visible light. Since the configuration of the second LiDAR sensor 51 is substantially the same as that of the first LiDAR sensor 41, a repetitive explanation thereof will be omitted.

That is, the second LiDAR sensor 51 is a sensor that senses information of at least an area on the left of the vehicle 100. The second LiDAR sensor 51 outputs a signal corresponding to an attribute of the sensed return light, such as intensity and wavelength. The above-mentioned information is acquired by appropriately processing the signal outputted from the second LiDAR sensor 51 by an information processing section (not illustrated). The information processing section may be provided in the left front sensor system 1LF or may be installed in the vehicle 100.

The second acceleration sensor 52 is supported by a second support member 53 together with the second LiDAR sensor 51. The second acceleration sensor 52 outputs a signal A2 corresponding to the attitude of the second support member 53, that is, the attitude of the second LiDAR sensor 51.

The second screw mechanism 54 is a mechanism for adjusting the attitude of the second LiDAR sensor 51 with respect to the housing 11 by adjusting the attitude of the second support member 53. The second screw mechanism 54 includes a second horizontal adjusting screw 541 and a second vertical adjusting screw 542.

The second horizontal adjusting screw 541 extends through the housing 11. The second horizontal adjusting screw 541 is connected to the second support member 53 via a joint (not illustrated). A head portion of the second horizontal adjusting screw 541 is disposed outside the housing 11. When the head portion is rotated by a predetermined tool, the rotation of the second horizontal adjusting screw 541 is converted into a movement for changing the attitude of the second support member 53 in a horizontal plane (in a plane including the front-rear direction and the left-right direction in the figure) by the above-described joint. It should be noted that the "horizontal plane" used herein need not coincide with a strict horizontal plane. Since the construction itself of the joint is well known, a detailed description thereof will be omitted.

The second vertical adjusting screw 542 extends through the housing 11. The second vertical adjusting screw 542 is connected to the second support member 53 via a joint (not illustrated). A head portion of the second vertical adjusting screw 542 is disposed outside the housing 11. When the head portion is rotated by a predetermined tool, the rotation of the second vertical adjusting screw 542 is converted into a motion for changing the attitude of the second support member 53 in a vertical plane (in a plane including the front-rear direction and the up-down direction in the figure) by the joint. It should be noted that the "vertical plane" used herein need not coincide with a strict vertical plane. Since the construction itself of the joint is well known, a detailed description thereof will be omitted.

The second actuator 55 is a device for adjusting a sensing reference position of the second LiDAR sensor 51. The second actuator 55 is disposed in the lamp chamber 13 and is coupled to the second LiDAR sensor 51.

The left front sensor system 1LF comprises a processor 16 and a memory 17. Examples of the processor 16 may include a CPU, an MPU, and a GPU. The processor 16 may include a plurality of processor cores. Examples of the memory 17 may include a ROM and a RAM. The ROM may store a program for executing the processing described above. The program may include an artificial intelligence program. Examples of the artificial intelligence program may include a learned neural network with deep learning. For example, the processor 16 may designate at least a part of the program stored in the ROM, load the program on the RAM, and execute the processing described above in cooperation with the RAM. At least some of the functions of the processor 16 may be implemented by at least one hardware resource different from the processor 16 and the memory 17. Examples of such hardware resources may include integrated circuits such as an ASIC and an FPGA.

The memory 17 is supported by the housing 11. The memory 17 may be supported on the outer surface of the housing 11 or may be disposed in the lamp chamber 13.

A method of installing the left front sensor system 1LF configured as described above in the vehicle 100 will be described.

First, before the left front sensor system 1LF is installed in the vehicle 100, the attitudes of the first sensor module 14 and the second sensor module 15 with respect to the housing 11 are adjusted. Specifically, by changing the attitude of the first support member 43 with respect to the housing 11 using the first screw mechanism 44, the sensing reference position of the first LiDAR sensor 41 is adjusted. Similarly, by changing the attitude of the second support member 53 with respect to the housing 11 using the second screw mechanism 54, the sensing reference position of the second LiDAR sensor 51 is adjusted. One time point before the left front sensor system 1LF is installed in the vehicle 100 is an example of a first time point.

The first acceleration sensor 42 outputs a signal A1 (t1) corresponding to the attitude of the first support member 43 corresponding to the adjustment result of the sensing reference position of the first LiDAR sensor 41. That is, the signal A1 (t1) corresponds to an output value V11 of the first acceleration sensor 42 before the left front sensor system 1LF is installed in the vehicle 100. The signal A1 (t1) is inputted to the memory 17. The memory 17 stores the output value V11 of the first acceleration sensor 42 corresponding to the signal A1 (t1). The output value V11 is an example of a first output value.

The second acceleration sensor 52 outputs a signal A2 (t1) corresponding to the attitude of the second support member 53 corresponding to the adjustment result of the sensing reference position of the second LiDAR sensor 51. That is, the signal A2 (t1) corresponds to an output value V21 of the second acceleration sensor 52 before the left front sensor system 1LF is installed in the vehicle 100. The signal A2 (t1) is inputted to the memory 17. The memory 17 stores the output value V21 of the second acceleration sensor 52 corresponding to the signal A2 (t1). The output value V21 is an example of the first output value.

Next, the left front sensor system 1LF is installed in the vehicle 100. At this time, the sensing reference positions of the respective LiDAR sensors may deviate from desired positions due to tolerances of vehicle body components or positional deviation of the left front sensor system 1 LF with respect to the vehicle body. Accordingly, after the left front sensor system 1LF is installed in the vehicle 100, the sensing reference position of the first LiDAR sensor 41 and the sensing reference position of the second LiDAR sensor 51 are readjusted. In other words, at least one of the position and the attitude of the left front sensor system 1LF with respect to the vehicle body of the vehicle 100 is adjusted. One time point after the left front sensor system 1LF is installed in the vehicle 100 is an example of a second time point.

Specifically, the first acceleration sensor 42 outputs a signal A1 (t2) corresponding to the attitude of the first support member 43 that further corresponds to the installed attitude of the left front sensor system 1LF with respect to the vehicle body. That is, the signal A1 (t2) corresponds to the output value V12 of the first acceleration sensor 42 after the left front sensor system 1LF is installed in the vehicle 100. The output value V12 is an example of a second output value.

The processor 16 acquires the output value V12 of the first acceleration sensor 42. The signal A1 (t2) outputted from the first acceleration sensor 42 may be inputted to the processor 16 or the memory 17. In the former case, the processor 16 directly acquires the output value V12. In the latter case, the processor 16 acquires the output value V12 via the memory 17.

The processor 16 acquires a difference D1 between the output value V12 and the output value V12. The difference D1 reflects the deviation of the sensing reference position of the first LiDAR sensor 41 caused by the installing of the left front sensor system 1 LF in the vehicle 100.

Based on the acquired difference D1, the processor 16 calculates a correction amount of at least one of the position and the attitude of the first LiDAR sensor 41, which is required to cancel the deviation of the sensing reference position sensed by the first LiDAR sensor 41. The processor 16 outputs a signal P1. The signal P1 is inputted to the first actuator 45. The signal P1 causes the first actuator 45 to perform an operation required to adjust at least one of the position and the attitude of the first LiDAR sensor 41 by the calculated correction amount. As a result, readjustment of the sensing reference position of the first LiDAR sensor 41 changed by the installing of the left front sensor system 1LF in the vehicle 100 is completed. The first actuator 45 is an example of an adjustment mechanism.

Similarly, the second acceleration sensor 52 outputs a signal A2 (t2) corresponding to the attitude of the second support member 53 that further corresponds to the installed attitude of the left front sensor system 1LF with respect to the vehicle body. That is, the signal A2 (t2) corresponds to the output value V22 of the second acceleration sensor 52 after the left front sensor system 1LF is installed in the vehicle 100. The output value V22 is an example of the second output value.

The processor 16 acquires the output value V22 of the second acceleration sensor 52. The signal A2 (t2) outputted from the second acceleration sensor 52 may be inputted to the processor 16 or the memory 17. In the former case, the processor 16 directly acquires the output value V22. In the latter case, the processor 16 acquires the output value V22 via the memory 17.

The processor 16 acquires a difference D2 between the output value V21 and the output value V22. The difference D2 reflects the deviation of the sensing reference position of the second LiDAR sensor 51 caused by the installing of the left front sensor system 1LF in the vehicle 100.

Based on the acquired difference D2, the processor 16 calculates a correction amount of at least one of the position and the attitude of the second LiDAR sensor 51, which is required to cancel the deviation of the sensing reference position sensed by the second LiDAR sensor 51. The processor 16 outputs a signal P2. The signal P2 is inputted to the second actuator 55. The signal P2 causes the second actuator 55 to perform an operation required to adjust at least one of the position and the attitude of the second LiDAR sensor 51 by the calculated correction amount. As a result, readjustment of the sensing reference position of the second LiDAR sensor 51 changed by the installing of the left front sensor system 1LF in the vehicle 100 is completed. The second actuator 55 is an example of the adjustment mechanism.

According to the configuration of the present embodiment, even if there is a deviation in the sensing reference position of each LiDAR sensor between before and after the left front sensor system 1LF is installed in the vehicle 100, it is possible to automate the adjustment operation to cancel the deviation. Therefore, it is possible to reduce the burden of adjusting the sensing reference positions of the respective LiDAR sensors after the left front sensor system 1LF is installed in the vehicle 100.

For example, adjustment of the sensing reference positions of the respective LiDAR sensors before the left front sensor system 1LF is installed in the vehicle 100 may be performed by a manufacturer of the left front sensor system 1LF. On the other hand, the adjustment of the sensing reference position of the respective LiDAR sensors after the left front sensor system 1LF is installed in the vehicle 100 may be performed, for example, by a manufacturer who assembles the vehicle 100 by using the left front sensor system 1LF as a part. In this case, it is possible to reduce the burden of the latter entity for adjusting the sensing reference positions of the respective LiDAR sensors. The manufacturer of the left front sensor system 1LF is an example of a first entity. The manufacturer assembling the vehicle 100 is an example of a second entity.

The functions of the processor 16 may be realized by a control device installed in the vehicle 100, or may be realized by a processor supported by the housing 11. In the latter case, the processor 16 may be supported on the outer surface of the housing 11 or may be disposed in the lamp chamber 13. In this case, the processing load of the control device installed in the vehicle 100 can be reduced.

The left front sensor system 1LF includes a lamp unit 18. The lamp unit 18 is accommodated in the housing 11. The lamp unit 18 includes a light source and an optical system. The optical system includes at least one of a lens and a reflector.

Examples of the light source may include a lamp light source and a semiconductor light emitting device. Examples of lamp light sources may include an incandescent lamp, a halogen lamp, a discharge lamp, a neon lamp. Examples of the semiconductor light emitting device may include a light emitting diode, a laser diode, and an organic EL device. The light emitted from the light source passes through the optical system and is emitted from the lamp unit 18. The light emitted from the lamp unit 18 passes through the translucent member 12 and illuminates a predetermined region outside the vehicle 100.

The left front sensor system 1LF includes a third screw mechanism 19. The third screw mechanism 19 is a mechanism for adjusting the attitude of the lamp unit 18. The third screw mechanism 19 includes a third horizontal adjusting screw 191 and a third vertical adjusting screw 192. The third screw mechanism 19 is an example of a light source adjustment mechanism.

The third horizontal adjusting screw 191 extends through the housing 11. The third horizontal adjusting screw 191 is connected to the lamp unit 18 via a joint (not illustrated). A head portion of the third horizontal adjusting screw 191 is disposed outside the housing 11. When the head portion is rotated by a predetermined tool, the rotation of the third horizontal adjusting screw 191 is converted into a motion for changing the attitude of the lamp unit 18 in a horizontal plane (in a plane including the front-rear direction and the left-right direction in the figure) by the joint. It should be noted that the "horizontal plane" used herein need not coincide with a strict horizontal plane. Since the construction itself of the joint is well known, a detailed description thereof will be omitted.

The third vertical adjusting screw 192 extends through the housing 11. The third vertical adjusting screw 192 is connected to the lamp unit 18 via a joint (not illustrated). A head portion of the third vertical adjusting screw 192 is disposed outside the housing 11. When the head portion is rotated by a predetermined tool, the rotation of the third vertical adjusting screw 192 is converted into a motion for changing the attitude of the lamp unit 18 in the vertical plane (in the plane including the front-rear direction and the up-down direction in the figure) by the joint. It should be noted that the "vertical plane" used herein need not coincide with a strict vertical plane. Since the construction itself of the joint is well known, a detailed description thereof will be omitted.

From the viewpoint of efficiently acquiring information around the vehicle 100 and from the viewpoint of design, it is desired to dispose a sensor for acquiring information outside the vehicle in the vicinity of the lamp devices disposed at the four corners of the vehicle 100. According to the above-described configuration, integration of the lamp device and the sensor system can be made easy to meet the above-described demand.

In the present embodiment, the left front sensor system 1LF is exemplified as the sensor system. However, the configuration described with reference to the left front sensor system 1RF is also applicable to a right front sensor system to be disposed in a right front corner of the vehicle 100 illustrated in FIG. 1, a left rear sensor system to be disposed in a left rear corner of the vehicle 100 illustrated in FIG. 1 and a right rear sensor system 1RB to be disposed in a right rear corner of the vehicle 100 illustrated in FIG. 1. For example, the right front sensor 1RF system may have a configuration that is symmetrical with the left front sensor system 1LF relative to the left-right direction. The left rear sensor system 1LB may have a configuration that is symmetrical with the left front sensor system 1LF relative to the front-rear direction. The right rear sensor system 1RB may have a configuration that is symmetrical with the left rear sensor system 1LB relative to the left-right direction. This description will be similarly applied to the following examples of the embodiment.

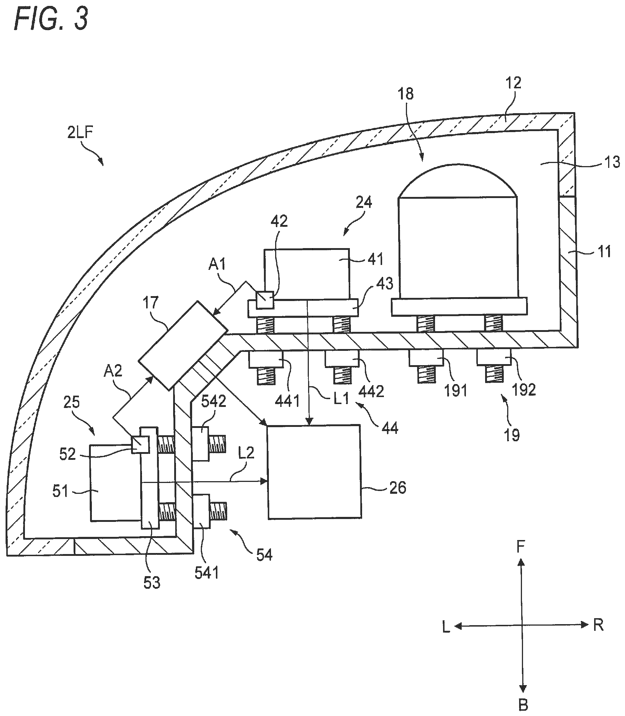

FIG. 3 schematically illustrates a configuration of a left front sensor system 2LF according to a second embodiment. Components that are the same as or equivalent to those of the left front sensor system 1LF according to the first embodiment are assigned with the same reference numerals, and repetitive descriptions for those will be omitted.

The left front sensor system 2LF comprises a first sensor module 24. The first sensor module 24 includes a first LiDAR sensor 41, a first acceleration sensor 42, a first support member 43, and a first screw mechanism 44.

The left front sensor system 2LF comprises a second sensor module 25. The second sensor module 25 includes a second LiDAR sensor 51, a second acceleration sensor 52, a second support member 53, and a second screw mechanism 54.

The left front sensor system 2LF includes a processor 26. Examples of the processor 26 may include a CPU, an MPU, and a GPU. At least some of the functions of the processor 26 may be realized by at least one hardware resource different from the processor 26 and the memory 17. Examples of such hardware resources may include integrated circuits such as an ASIC and an FPGA.

A method of installing the left front sensor system 2LF configured as described above in the vehicle 100 will be described.

First, before the left front sensor system 2LF is installed in the vehicle 100, the attitudes of the first sensor module 24 and the second sensor module 25 with respect to the housing 11 are adjusted. Specifically, by changing the attitude of the first support member 43 with respect to the housing 11 using the first screw mechanism 44, the sensing reference position of the first LiDAR sensor 41 is adjusted. Similarly, by changing the attitude of the second support member 53 with respect to the housing 11 using the second screw mechanism 54, the sensing reference position of the second LiDAR sensor 51 is adjusted. One time point before the left front sensor system 2LF is installed in the vehicle 100 is an example of the first time point.

The first acceleration sensor 42 outputs a signal A1 (t1) corresponding to the attitude of the first support member 43 corresponding to the adjustment result of the sensing reference position of the first LiDAR sensor 41. That is, the signal A1 (t1) corresponds to the output value V11 of the first acceleration sensor 42 before the left front sensor system 2LF is installed in the vehicle 100. The signal A1 (t1) is inputted to the memory 17. The memory 17 stores the output value V11 of the first acceleration sensor 42 corresponding to the signal A1 (t1). The output value V11 is an example of a first output value.

The second acceleration sensor 52 outputs a signal A2 (t1) corresponding to the attitude of the second support member 53 corresponding to the adjustment result of the sensing reference position of the second LiDAR sensor 51. That is, the signal A2 (t1) corresponds to the output value V21 of the second acceleration sensor 52 before the left front sensor system 2LF is installed in the vehicle 100. The signal A2 (t1) is inputted to the memory 17. The memory 17 stores the output value V21 of the second acceleration sensor 52 corresponding to the signal A2 (t1). The output value V21 is an example of the first output value.

Next, the left front sensor system 2LF is installed in the vehicle 100. At this time, the sensing reference positions of the respective LiDAR sensors may deviate from desired positions due to tolerances of vehicle body components or positional deviation of the left front sensor system 2LF with respect to the vehicle body. Accordingly, after the left front sensor system 2LF is installed in the vehicle 100, the sensing reference position of the first LiDAR sensor 41 and the sensing reference position of the second LiDAR sensor 51 are readjusted. In other words, at least one of the position and the attitude of the left front sensor system 2LF with respect to the vehicle body of the vehicle 100 is adjusted. One time point after the left front sensor system 2LF is installed in the vehicle 100 is an example of the second time point.

Specifically, the first acceleration sensor 42 outputs a signal A1 (t2) corresponding to the attitude of the first support member 43 that further corresponds to the installed attitude of the left front sensor system 2LF with respect to the vehicle body. That is, the signal A1 (t2) corresponds to the output value V12 of the first acceleration sensor 42 after the left front sensor system 2LF is installed in the vehicle 100. The output value V12 is an example of a second output value.

The processor 26 acquires the output value V12 of the first acceleration sensor 42. The signal A1 (t2) outputted from the first acceleration sensor 42 may be inputted to the processor 26 or the memory 17. In the former case, the processor 26 directly acquires the output value V12. In the latter case, the processor 26 acquires the output value V12 via the memory 17.

The processor 26 acquires a difference D1 between the output value V12 and the output value V12. The difference D1 reflects the deviation of the sensing reference position of the first LiDAR sensor 41 caused by the installing of the left front sensor system 2LF in the vehicle 100.

In the present embodiment, no mechanism for adjusting the attitude of the first LiDAR sensor 41 is provided. Therefore, when the deviation of the sensing reference position of the first LiDAR sensor 41 is sensed, the attitude of the first LiDAR sensor 41 is not changed so as to cancel the deviation, but the information acquired by the first LiDAR sensor 41 is corrected.

Specifically, the first LiDAR sensor 41 outputs a signal L1 corresponding to an attribute of the sensed return light, such as intensity and wavelength. The signal L1 is inputted to the processor 26. Based on the acquired difference D1, the processor 26 corrects the signal L1 so as to be a signal that would have been acquired if there was no deviation in the sensing reference position of the first LiDAR sensor 41.

As a result, it is possible to acquire substantially the same data as when at least one of the position and the attitude of the first LiDAR sensor 41 is changed so as to cancel the deviation of the sensing reference position. That is, it can be said that the processor 26 indirectly readjusts the sensing reference position of the first LiDAR sensor 41 changed by the installing of the left front sensor system 2LF in the vehicle 100.

Similarly, the second acceleration sensor 52 outputs a signal A2 (t2) corresponding to the attitude of the second support member 53 that further corresponds to the installed attitude of the left front sensor system 2LF with respect to the vehicle body. That is, the signal A2 (t2) corresponds to the output value V22 of the second acceleration sensor 52 after the left front sensor system 2LF is installed in the vehicle 100. The output value V22 is an example of the second output value.

The processor 26 acquires the output value V22 of the second acceleration sensor 52. The signal A2 (t2) outputted from the second acceleration sensor 52 may be inputted to the processor 26 or the memory 17. In the former case, the processor 26 directly acquires the output value V22. In the latter case, the processor 26 acquires the output value V22 via the memory 17.

The processor 26 acquires a difference D2 between the output value V21 and the output value V22. The difference D2 reflects the deviation of the sensing reference position of the second LiDAR sensor 51 caused by the installing of the left front sensor system 2LF in the vehicle 100.

In the present embodiment, no mechanism for adjusting the attitude of the second LiDAR sensor 51 is provided. Therefore, when the deviation of the sensing reference position of the second LiDAR sensor 51 is sensed, the attitude of the second LiDAR sensor 51 is not changed so as to cancel the deviation, but the information acquired by the second LiDAR sensor 51 is corrected.

Specifically, the second LiDAR sensor 51 outputs a signal L2 corresponding to an attribute of the sensed return light, such as intensity and wavelength. The signal L2 is inputted to the processor 26. Based on the acquired difference D2, the processor 26 corrects the signal L2 so as to be a signal that would have been acquired if there was no deviation in the sensing reference position of the second LiDAR sensor 51.

As a result, it is possible to acquire substantially the same data as when at least one of the position and the attitude of the second LiDAR sensor 51 is changed so as to cancel the deviation of the sensing reference position. That is, it can be said that the processor 26 indirectly readjusts the sensing reference position of the second LiDAR sensor 51 changed by the installing of the left front sensor system 2LF in the vehicle 100.

According to the configuration of the present embodiment, even if there is a deviation in the sensing reference position of each LiDAR sensor between before and after the left front sensor system 2LF is installed in the vehicle 100, it is possible to automate the adjustment operation to cancel the deviation. Therefore, it is possible to reduce the burden of adjusting the sensing reference positions of the respective LiDAR sensors after the left front sensor system 2LF is installed in the vehicle 100.

For example, adjustment of the sensing reference positions of the respective LiDAR sensors before the left front sensor system 2LF is installed in the vehicle 100 may be performed by a manufacturer of the left front sensor system 2LF. On the other hand, the adjustment of the sensing reference position of the respective LiDAR sensors after the left front sensor system 2LF is installed in the vehicle 100 may be performed, for example, by a manufacturer who assembles the vehicle 100 by using the left front sensor system 2LF as a part. In this case, it is possible to reduce the burden of the latter entity for adjusting the sensing reference positions of the respective LiDAR sensors. The manufacturer of the left front sensor system 2LF is an example of the first entity. The manufacturer assembling the vehicle 100 is an example of the second entity.

Further, according to the configuration of the present embodiment, it is possible to omit the mechanism for adjusting at least one of the position and the attitude of each LiDAR sensor. Therefore, it is possible to suppress an increase in the size and weight of the left front sensor system 2LF.

The functions of the processor 26 may be realized by a control device installed in the vehicle 100, or may be realized by a processor supported by the housing 11. In the latter case, the processor 26 may be supported on the outer surface of the housing 11 or may be disposed in the lamp chamber 13. In this case, the processing load of the control device installed in the vehicle 100 can be reduced.

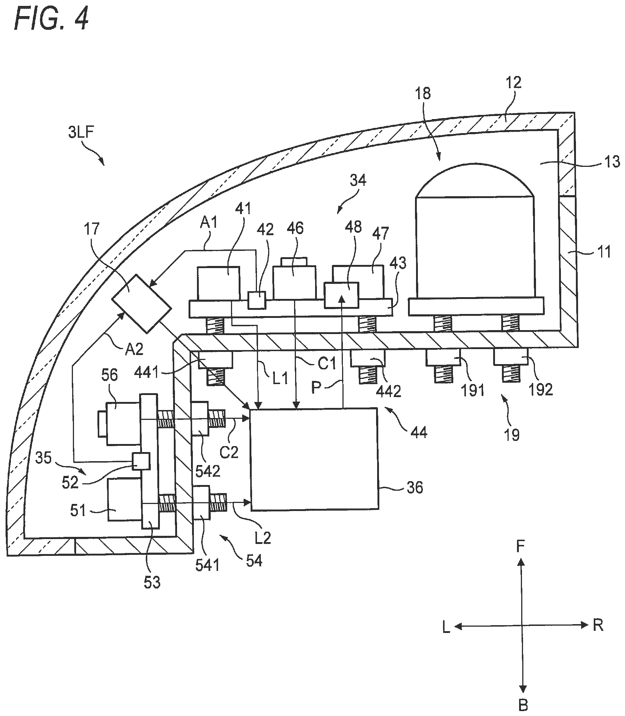

FIG. 4 schematically illustrates a configuration of a left front sensor system 3LF according to a third embodiment. Components that are the same as or equivalent to those of the left front sensor system 1LF according to the first embodiment are assigned with the same reference numerals, and repetitive descriptions for those will be omitted.

The left front sensor system 3LF comprises a first sensor module 34. The first sensor module 34 includes a first camera 46, a millimeter wave radar 47, and an actuator 48 in addition to the first LiDAR sensor 41, the first acceleration sensor 42, the first support member 43, and the first screw mechanism 44.

The first acceleration sensor 42 is supported by the first support member 43 together with the first LiDAR sensor 41, the first camera 46, and the millimeter wave radar 47. The first accelerometer 42 is disposed between the first LiDAR sensor 41 and the first camera 46.

The first camera 46 is a device for capturing an image of at least ahead of the vehicle 100. That is, the first camera 46 is a sensor that senses information of at least ahead of the vehicle 100. The front of the vehicle 100 is an example of the outside of the vehicle. The first camera 46 may be a visible light camera or an infrared light camera. The first camera 46 is configured to output an image signal C1 corresponding to the captured image. The information at least in front of the vehicle 100 sensed by the first camera 46 is acquired by appropriately processing the image signal C1 by an information processing section (not illustrated). The information processing section may be provided in the left front sensor system 3LF or may be installed in the vehicle 100.

The millimeter wave radar 47 has a configuration for transmitting a millimeter wave and a configuration for receiving a reflected wave as a result of the millimeter wave being reflected by at least an object that is present in front of the vehicle 100. The front of the vehicle 100 is an example of the outside of the vehicle. As required, the millimeter wave radar 47 may include a scan device that sweeps the millimeter wave to change the transmitting direction (i.e., the sensing direction). In the present embodiment, a millimeter wave having a frequency of 76GHz is used. Examples of other frequencies may include 24GHz, 26GHz, and 79GHz.

The millimeter wave radar 47 can obtain the distance to the object associated with the reflected wave, for example, based on the time period from the time when the millimeter wave is transmitted in a certain direction to the time when the reflected wave is received. Further, by accumulating such distance data in association with the sensing position, it is possible to obtain information as to the shape of the object associated with the reflected wave.

That is, the millimeter wave radar 47 is a sensor that senses information of at least ahead of the vehicle 100. The millimeter wave radar 47 outputs a signal corresponding to an attribute (intensity or the like) of the reflected wave as received. The above-mentioned information is acquired by appropriately processing a signal outputted from the millimeter wave radar 47 by an information processing section (not illustrated). The information processing section may be provided in the left front sensor system 3LF or may be installed in the vehicle 100.

The actuator 48 is a device for adjusting the sensing reference position of the millimeter wave radar 47. The actuator 48 is disposed in the lamp chamber 13 and coupled to the millimeter wave radar 47.

The left front sensor system 3LF comprises a second sensor module 35. The second sensor module 35 includes a second camera 56 in addition to the second LiDAR sensor 51, the second acceleration sensor 52, the second support member 53, and the second screw mechanism 54.

The second acceleration sensor 52 is supported by the second support member 53 together with the second LiDAR sensor 51 and the second camera 56. The second accelerometer 52 is disposed between the second LiDAR sensor 51 and the second camera 56.

The second camera 56 is a device for capturing an image of at least on the left of the vehicle 100. That is, the second camera 56 is a sensor that senses information of at least on the left of the vehicle 100. The left side of the vehicle 100 is an example of the outside of the vehicle. The second camera 56 may be a visible light camera or an infrared light camera. The second camera 56 is configured to output an image signal C2 corresponding to the captured image. The information of at least ahead of the vehicle 100 sensed by the second camera 56 is acquired by appropriately processing the image signal C2 by an information processing section (not illustrated). The information processing section may be provided in the left front sensor system 3LF or may be installed in the vehicle 100.

The left front sensor system 3LF includes a processor 36. Examples of the processor 36 may include a CPU, an MPU, and a GPU. At least some of the functions of the processor 36 may be implemented by at least one hardware resource different from the processor 36 and the memory 17. Examples of such hardware resources may include integrated circuits such as an ASIC and an FPGA.

A method of installing the left front sensor system 3LF configured as described above in the vehicle 100 will be described.

First, before the left front sensor system 3LF is installed in the vehicle 100, the attitudes of the first sensor module 34 and the second sensor module 35 with respect to the housing 11 are adjusted. Specifically, the first LiDAR sensor 41, the first camera 46, and the millimeter wave radar 47 are adjusted by changing the attitude of the first support member 43 with respect to the housing 11 using the first screw mechanism 44. Similarly, by changing the attitude of the second support member 53 with respect to the housing 11 using the second screw mechanism 54, the sensing reference positions of the second LiDAR sensor 51 and the second camera 56 are adjusted. One time point before the left front sensor system 3LF is installed in the vehicle 100 is an example of the first time point.

The first acceleration sensor 42 outputs a signal A1 (t1) corresponding to the attitude of the first support member 43 that further corresponds to the adjustment result of the sensing reference positions of the first LiDAR sensor 41, the first camera 46, and the millimeter wave radar 47. That is, the signal A1 (t1) corresponds to the output value V11 of the first acceleration sensor 42 before the left front sensor system 3LF is installed in the vehicle 100. The signal A1 (t1) is inputted to the memory 17. The memory 17 stores the output value V11 of the first acceleration sensor 42 corresponding to the signal A1 (t1). The output value V11 is an example of a first output value.

The second acceleration sensor 52 outputs a signal A2 (t1) corresponding to the attitude of the second support member 53 that further corresponds to the adjustment result of the sensing reference positions of the second LiDAR sensor 51 and the second camera 56. That is, the signal A2 (t1) corresponds to the output value V21 of the second acceleration sensor 52 before the left front sensor system 3LF is installed in the vehicle 100. The signal A2 (t1) is inputted to the memory 17. The memory 17 stores the output value V21 of the second acceleration sensor 52 corresponding to the signal A2 (t1). The output value V21 is an example of the first output value.

Next, the left front sensor system 3LF is installed in the vehicle 100. At this time, the sensing reference positions of the respective sensors may deviate from desired positions due to tolerances of vehicle body components or positional deviation of the left front sensor system 3LF with respect to the vehicle body. Therefore, after the left front sensor system 3LF is installed in the vehicle 100, the sensing reference positions of the respective sensors are readjusted. In other words, at least one of the position and the attitude of the left front sensor system 3LF with respect to the vehicle body of the vehicle 100 is adjusted. One time point after the left front sensor system 3LF is installed in the vehicle 100 is an example of the second time point.

Specifically, the first acceleration sensor 42 outputs a signal A1 (t2) corresponding to the attitude of the first support member 43 that further corresponds to the installed attitude of the left front sensor system 3LF with respect to the vehicle body. That is, the signal A1 (t2) corresponds to the output value V12 of the first acceleration sensor 42 after the left front sensor system 3LF is installed in the vehicle 100. The output value V12 is an example of a second output value.

The processor 36 acquires the output value V12 of the first acceleration sensor 42. The signal A1 (t2) outputted from the first acceleration sensor 42 may be inputted to the processor 36 or the memory 17. In the former case, the processor 36 acquires the output value V12 directly. In the latter case, the processor 36 acquires the output value V12 via the memory 17.

The processor 36 acquires a difference D1 between the output value V12 and the output value V12. The difference D1 reflects the deviation of the sensing reference positions of the first LiDAR sensor 41, the first camera 46, and the millimeter wave radar 47 caused by the installing of the left front sensor system 3LF in the vehicle 100.

In the present embodiment, no mechanism for adjusting the attitudes of the first LiDAR sensor 41 and the first camera 46 is provided. Therefore, when the deviation of the sensing reference positions of the first LiDAR sensor 41 and the first camera 46 is sensed, the attitudes of the first LiDAR sensor 41 and the first camera 46 are not changed so as to cancel the deviation, but the information acquired by the first LiDAR sensor 41 and the information acquired by the first camera 46 are corrected.

Specifically, the processor 36 corrects the signal L1 outputted from the first LiDAR sensor 41 based on the acquired difference D1 so as to be a signal that would have been acquired if there was no deviation in the sensing reference position of the first LiDAR sensor 41.

Similarly, the processor 36 corrects the image signal C1 outputted from the first camera 46 based on the acquired difference D1 so as to be a signal that would have been acquired if there was no deviation in the sensing reference position of the first camera 46.

As a result, it is possible to acquire substantially the same data as when at least one of the positions and the attitudes of the first LiDAR sensor 41 and the first camera 46 is changed so as to cancel the deviation of the sensing reference positions. That is, it can be said that the processor 36 indirectly readjusts the sensing reference positions of the first LiDAR sensor 41 and the first camera 46 changed by the installing of the left front sensor system 3LF in the vehicle 100.

Similarly, the second acceleration sensor 52 outputs a signal A2 (t2) corresponding to the attitude of the second support member 53 that further corresponds to the installed attitude of the left front sensor system 3LF with respect to the vehicle body. That is, the signal A2 (t2) corresponds to the output value V22 of the second acceleration sensor 52 after the left front sensor system 3LF is installed in the vehicle 100. The output value V22 is an example of the second output value.

The processor 36 acquires the output value V22 of the second acceleration sensor 52. The signal A2 (t2) outputted from the second acceleration sensor 52 may be inputted to the processor 36 or the memory 17. In the former case, the processor 36 acquires the output value V22 directly. In the latter case, the processor 36 acquires the output value V22 via the memory 17.

The processor 36 acquires a difference D2 between the output value V21 and the output value V22. The difference D2 reflects the deviation of the sensing reference positions of the second LiDAR sensor 51 and the second camera 56 caused by the installing of the left front sensor system 3LF in the vehicle 100.

In the present embodiment, no mechanism for adjusting the attitudes of the second LiDAR sensors 51 and the second camera 56 is provided. Therefore, when the deviation of the sensing reference positions of the second LiDAR sensor 51 and the second camera 56 is sensed, the attitudes of the second LiDAR sensor 51 and the second camera 56 are not changed so as to cancel the deviation, but the information acquired by the second LiDAR sensor 51 and the information acquired by the second camera 56 are corrected.

Specifically, the processor 36 corrects the signal L2 outputted from the second LiDAR sensor 51 based on the acquired difference D2 so as to be a signal that would have been acquired if there was no deviation in the sensing reference position of the second LiDAR sensor 51.

Similarly, the processor 36 corrects the image signal C2 outputted from the second camera 56 based on the acquired difference D2 so as to be a signal that would have been acquired if there was no deviation in the sensing reference position of the second camera 56.

As a result, it is possible to acquire substantially the same data as when at least one of the positions and the attitudes of the second LiDAR sensor 51 and the second camera 56 is changed so as to cancel the deviation of the sensing reference position. That is, it can be said that the processor 36 indirectly readjusts the sensing reference positions of the second LiDAR sensor 51 and the second camera 56, which are changed by the installing of the left front sensor system 3LF in the vehicle 100.

The difference D1 between the output value V12 of the first acceleration sensor 42 and the output value V12 reflects the deviation of the sensing reference position of the millimeter wave radar 47 caused by the installing of the left front sensor system 3LF in the vehicle 100.

Based on the acquired difference D1, the processor 36 calculates a correction amount of at least one of the position and the attitude of the millimeter wave radar 47, which is necessary for cancelling the deviation of the sensing reference position of the millimeter wave radar 47. The processor 36 outputs a signal P. The signal P is inputted to the actuator 48. The signal P causes the actuator 48 to perform an operation necessary to adjust at least one of the position and the attitude of the millimeter wave radar 47 by the calculated correction amount. As a result, readjustment of the sensing reference position of the millimeter wave radar 47 changed by the installing of the left front sensor system 3LF in the vehicle 100 is completed. The actuator 48 is an example of the adjustment mechanism.

According to the configuration of the present embodiment, even if there is a deviation in the sensing reference position of each sensor between before and after the left front sensor system 3LF is installed in the vehicle 100, it is possible to automate the adjustment operation to cancel the deviation. Therefore, it is possible to reduce the burden of adjusting the sensing reference positions of the respective sensors after the left front sensor system 3LF is installed in the vehicle 100.

For example, adjustment of the sensing reference positions of the respective sensors before the left front sensor system 3LF is installed in the vehicle 100 may be performed by a manufacturer of the left front sensor system 3LF. On the other hand, the adjustment of the sensing reference position of the respective sensors after the left front sensor system 3LF is installed in the vehicle 100 may be performed, for example, by a manufacturer who assembles the vehicle 100 by using the left front sensor system 3LF as a part. In this case, it is possible to reduce the burden of the latter entity for adjusting the sensing reference positions of the respective LiDAR sensors. The manufacturer of the left front sensor system 3LF is an example of the first entity. The manufacturer assembling the vehicle 100 is an example of the second entity.

Further, according to the configuration of the present embodiment, it is possible to omit mechanism for adjusting at least one of the positions and the attitudes of each LiDAR sensor and each camera. Therefore, it is possible to suppress an increase in the size and weight of the left front sensor system 3LF.

The functions of the processor 36 may be realized by a control device installed in the vehicle 100, or may be realized by a processor supported by the housing 11. In the latter case, the processor 36 may be supported on the outer surface of the housing 11 or may be disposed in the lamp chamber 13. In this case, the processing load of the control device installed in the vehicle 100 can be reduced.

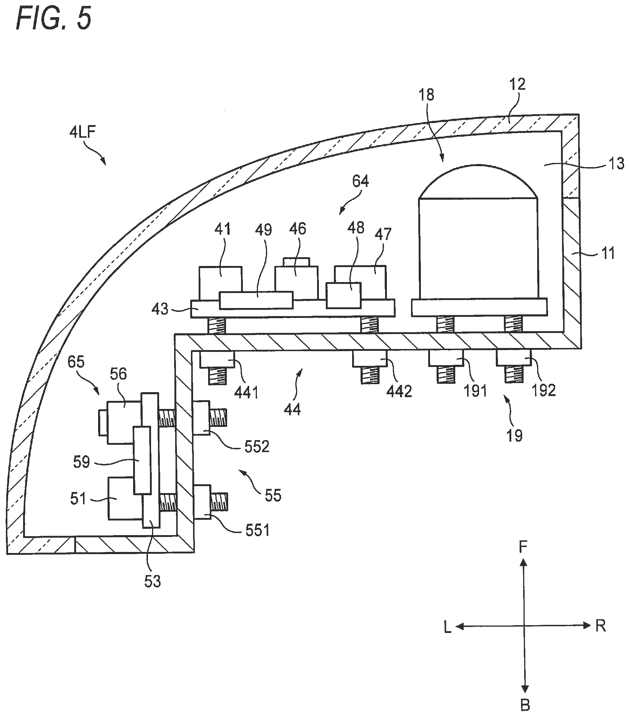

FIG. 5 schematically illustrates a configuration of the left front sensor system 4LF according to a fourth embodiment. Components that are the same as or equivalent to those of the left front sensor system 3LF according to the third embodiment are assigned with the same reference numerals, and repetitive descriptions for those will be omitted.

The left front sensor system 3LF comprises a first sensor module 64. The first sensor module 64 includes a first information processing device 49 in addition to the first LiDAR sensor 41, the first acceleration sensor 42, the first support member 43, the first screw mechanism 44, the first camera 46, the millimeter wave radar 47, and the actuator 48.

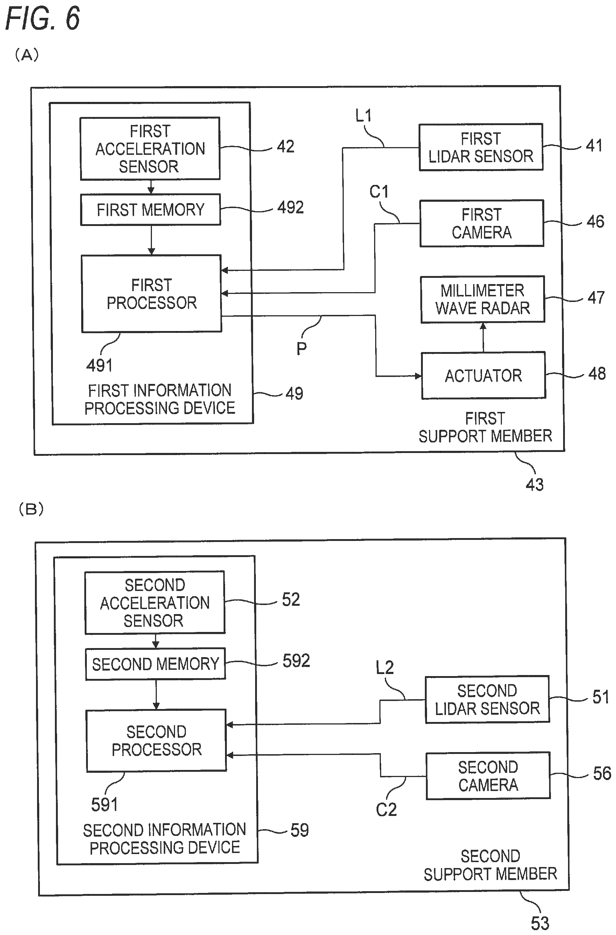

(A) in FIG. 6 illustrates a functional configuration of the first sensor module 64. The first information processing device 49 includes a first processor 491 and a first memory 492. Examples of the first processor 491 may include a CPU, an MPU, and a GPU. The first processor 491 may include a plurality of processor cores. Examples of the first memory 492 may include a ROM and a RAM. The ROM may store a program for executing the processing described above. The program may include an artificial intelligence program. Examples of the artificial intelligence program may include a learned neural network with deep learning. For example, the first processor 491 may designate at least a part of the program stored in the ROM, load the program on the RAM, and execute the processing described above in cooperation with the RAM. At least some of the functions of the first processor 491 may be realized by at least one hardware resource different from the first processor 491 and the first memory 492. Examples of such hardware resources may include integrated circuits such as an ASIC and an FPGA.
   As illustrated in FIG. 5, the first information processing device 49 has a single housing or substrate. The first information processing device 49 is supported by the first support member 43 together with the first LiDAR sensor 41, the first acceleration sensor 42, the first camera 46, and the millimeter wave radar 47.
   As illustrated in (A) in FIG. 6, in the present embodiment, the first acceleration sensor 42 is provided in a housing or on a substrate of the first information processing device 49. The first information processing device 49 is supported by the first support member 43 so that the first acceleration sensor 42 is disposed between the first LiDAR sensor 41 and the first camera 46. However, the first acceleration sensor 42 may be provided outside the housing or the substrate of the first information processing device 49 as long as the first acceleration sensor 42 is placed between the first LiDAR sensor 41 and the first camera 46.
   The left front sensor system 4LF comprises a second sensor module 65. The second sensor module 65 includes a second information processing device 59 in addition to the second LiDAR sensor 51, the second acceleration sensor 52, the second support member 53, the second screw mechanism 54, and the second camera 56.
(B) in FIG. 6 illustrates a functional configuration of the second sensor module 65. The second information processing device 59 includes a second processor 591 and a second memory 592. Examples of the second processor 591 may include a CPU, an MPU, and a GPU. The second processor 591 may include a plurality of processor cores. Examples of the second memory 592 may include a ROM and a RAM. The ROM may store a program for executing the processing described above. The program may include an artificial intelligence program. Examples of the artificial intelligence program may include a learned neural network with deep learning. For example, the second processor 591 may designate at least a part of the program stored in the ROM, load the program on the RAM, and execute the processing described above in cooperation with the RAM. At least some of the functions of the second processor 591 may be realized by at least one hardware resource different from the second processor 591 and the second memory 592. Examples of such hardware resources may include integrated circuits such as an ASIC and an FPGA.

As illustrated in FIG. 5, the second information processing device 59 has a single housing or substrate. The second information processing device 59 is supported by the second supporting member 53 together with the second LiDAR sensor 51, the second acceleration sensor 52, and the second camera 56.

As illustrated in (B) in FIG. 6, in the present embodiment, the second acceleration sensor 52 is provided in the housing or on the substrate of the second information processing device 59. The second information processing device 59 is supported by the second support member 53 so that the second acceleration sensor 52 is disposed between the second LiDAR sensor 51 and the second camera 56. However, the second acceleration sensor 52 may be provided outside the housing or the substrate of the second information processing device 59 as long as the second acceleration sensor 52 is placed between the second LiDAR sensor 51 and the second camera 56.

A method of installing the left front sensor system 4LF configured as described above in the vehicle 100 will be described.

First, before the left front sensor system 4LF is installed in the vehicle 100, the attitudes of the first sensor module 64 and the second sensor module 65 with respect to the housing 11 are adjusted. Specifically, the first LiDAR sensor 41, the first camera 46, and the millimeter wave radar 47 are adjusted by changing the attitude of the first support member 43 with respect to the housing 11 using the first screw mechanism 44. Similarly, by changing the attitude of the second support member 53 with respect to the housing 11 using the second screw mechanism 54, the sensing reference positions of the second LiDAR sensor 51 and the second camera 56 are adjusted. One time point before the left front sensor system 4LF is installed in the vehicle 100 is an example of the first time point.

The first acceleration sensor 42 outputs a signal A1 (t1) corresponding to the attitude of the first support member 43 that further corresponds to the adjustment result of the sensing reference positions of the first LiDAR sensor 41, the first camera 46, and the millimeter wave radar 47. That is, the signal A1 (t1) corresponds to the output value V11 of the first acceleration sensor 42 before the left front sensor system 4LF is installed in the vehicle 100. The signal A1 (t1) is inputted to the first memory 492. The first memory 492 stores the output value V11 of the first acceleration sensor 42 corresponding to the signal A1 (t1). The output value V11 is an example of a first output value.

The second acceleration sensor 52 outputs a signal A2 (t1) corresponding to the attitude of the second support member 53 that further corresponds to the adjustment result of the sensing reference positions of the second LiDAR sensor 51 and the second camera 56. That is, the signal A2 (t1) corresponds to the output value V21 of the second acceleration sensor 52 before the left front sensor system 4LF is installed in the vehicle 100. The signal A2 (t1) is inputted to the second memory 592. The second memory 592 stores the output value V21 of the second acceleration sensor 52 corresponding to the signal A2 (t1). The output value V21 is an example of the first output value.

Next, the left front sensor system 4LF is installed in the vehicle 100. At this time, the sensing reference positions of the respective sensors may deviate from desired positions due to tolerances of vehicle body components or positional deviation of the left front sensor system 4LF with respect to the vehicle body. Therefore, after the left front sensor system 4LF is installed in the vehicle 100, the sensing reference positions of the respective sensors are readjusted. In other words, at least one of the position and the attitude of the left front sensor system 4LF with respect to the vehicle body of the vehicle 100 is adjusted. One time point after the left front sensor system 4LF is installed in the vehicle 100 is an example of the second time point.

Specifically, the first acceleration sensor 42 outputs a signal A1 (t2) corresponding to the attitude of the first support member 43 that further corresponds to the installed attitude of the left front sensor system 4LF with respect to the vehicle body. That is, the signal A1 (t2) corresponds to the output value V12 of the first acceleration sensor 42 after the left front sensor system 4LF is installed in the vehicle 100. The output value V12 is an example of a second output value.

The first processor 491 acquires the output value V12 of the first acceleration sensor 42. The signal A1 (t2) outputted from the first acceleration sensor 42 may be inputted to the first processor 491 or the first memory 492. In the former case, the first processor 491 directly acquires the output value V12. In the latter case, the first processor 491 acquires the output value V12 via the first memory 492.

The first processor 491 acquires a difference D1 between the output value V12 and the output value V12. The difference D1 reflects the deviation of the sensing reference positions of the first LiDAR sensor 41, the first camera 46, and the millimeter wave radar 47 caused by the installing of the left front sensor system 4LF in the vehicle 100.

In the present embodiment, no mechanism for adjusting the attitudes of the first LiDAR sensor 41 and the first camera 46 is provided. Therefore, when the deviation of the sensing reference positions of the first LiDAR sensor 41 and the first camera 46 is sensed, the attitudes of the first LiDAR sensor 41 and the first camera 46 are not changed so as to cancel the deviation, but the information acquired by the first LiDAR sensor 41 and the information acquired by the first camera 46 are corrected.

Specifically, the first processor 491 corrects the signal L1 outputted from the first LiDAR sensor 41 based on the acquired difference D1 so as to be a signal that would have been acquired if there was no deviation in the sensing reference position of the first LiDAR sensor 41.

Similarly, the first processor 491 corrects the image signal C1 outputted from the first camera 46 based on the acquired difference D1 so as to be a signal that would have been acquired if there was no deviation in the sensing reference position of the first camera 46.

As a result, it is possible to acquire substantially the same data as when at least one of the positions and the attitudes of the first LiDAR sensor 41 and the first camera 46 is changed so as to cancel the deviation of the sensing reference positions. That is, it can be said that the first processor 491 indirectly readjusts the sensing reference positions of the first LiDAR sensor 41 and the first camera 46 changed by the installing of the left front sensor system 4LF in the vehicle 100.

Similarly, the second acceleration sensor 52 outputs a signal A2 (t2) corresponding to the attitude of the second support member 53 that further corresponds to the installed attitude of the left front sensor system 4LF with respect to the vehicle body. That is, the signal A2 (t2) corresponds to the output value V22 of the second acceleration sensor 52 after the left front sensor system 4LF is installed in the vehicle 100. The output value V22 is an example of the second output value.

The second processor 591 acquires the output value V22 of the second acceleration sensor 52. The signal A2 (t2) outputted from the second acceleration sensor 52 may be inputted to the second processor 591 or the second memory 592. In the former case, the second processor 591 acquires the output value V22 directly. In the latter case, the second processor 591 acquires the output value V22 through the second memory 592.

The second processor 591 acquires a difference D2 between the output value V21 and the output value V22. The difference D2 reflects the deviation of the sensing reference positions of the second LiDAR sensor 51 and the second camera 56 caused by the installing of the left front sensor system 4LF in the vehicle 100.

In the present embodiment, no mechanism for adjusting the attitudes of the second LiDAR sensors 51 and the second camera 56 is provided. Therefore, when the deviation of the sensing reference positions of the second LiDAR sensor 51 and the second camera 56 is sensed, the attitudes of the second LiDAR sensor 51 and the second camera 56 are not changed so as to cancel the deviation, but the information acquired by the second LiDAR sensor 51 and the information acquired by the second camera 56 are corrected.

Specifically, the second processor 591 corrects the signal L2 outputted from the second LiDAR sensor 51 based on the acquired difference D2 so as to be a signal that would have been acquired if there was no deviation in the sensing reference position of the second LiDAR sensor 51.

Similarly, the second processor 591 corrects the image signal C2 outputted from the second camera 56 based on the acquired difference D2 so as to be a signal that would have been acquired if there was no deviation in the sensing reference position of the second camera 56.

As a result, it is possible to acquire substantially the same data as when at least one of the positions and the attitudes of the second LiDAR sensor 51 and the second camera 56 is changed so as to cancel the deviation of the sensing reference position. That is, it can be said that the second processor 591 indirectly readjusts the sensing reference positions of the second LiDAR sensor 51 and the second camera 56 changed by the installing of the left front sensor system 4LF in the vehicle 100.

The difference D1 between the output value V12 of the first acceleration sensor 42 and the output value V12 reflects the deviation of the sensing reference position of the millimeter wave radar 47 caused by the installing of the left front sensor system 4LF in the vehicle 100.

The first processor 491 calculates, based on the acquired difference D1, a correction amount of at least one of the position and the attitude of the millimeter wave radar 47, which is necessary for cancelling the deviation of the sensing reference position of the millimeter wave radar 47. The first processor 491 outputs a signal P. The signal P is inputted to the actuator 48. The signal P causes the actuator 48 to perform an operation necessary to adjust at least one of the position and the attitude of the millimeter wave radar 47 by the calculated correction amount. As a result, readjustment of the sensing reference position of the millimeter wave radar 47 changed by the installing of the left front sensor system 4LF in the vehicle 100 is completed. The actuator 48 is an example of the adjustment mechanism.

According to the configuration of the present embodiment, even if there is a deviation in the sensing reference position of each sensor between before and after the left front sensor system 4LF is installed in the vehicle 100, it is possible to automate the adjustment operation to cancel the deviation. Therefore, it is possible to reduce the burden of adjusting the sensing reference positions of the respective sensors after the left front sensor system 4LF is installed in the vehicle 100.

For example, adjustment of the sensing reference positions of the respective sensors before the left front sensor system 4LF is installed in the vehicle 100 may be performed by a manufacturer of the left front sensor system 4LF. On the other hand, the adjustment of the sensing reference position of the respective sensors after the left front sensor system 4LF is installed in the vehicle 100 may be performed, for example, by a manufacturer who assembles the vehicle 100 by using the left front sensor system 4LF as a part. In this case, it is possible to reduce the burden of the latter entity for adjusting the sensing reference positions of the respective LiDAR sensors. The manufacturer of the left front sensor system 4LF is an example of the first entity. The manufacturer assembling the vehicle 100 is an example of the second entity.

Further, according to the configuration of the present embodiment, it is possible to omit mechanism for adjusting at least one of the positions and the attitudes of each LiDAR sensor and each camera. Therefore, it is possible to suppress an increase in the size and weight of the left front sensor system 4LF.

According to the configuration of the present embodiment, the first processor 491 and the first memory 492 are supported by the first support member 43, and the second processor 591 and the second memory 592 are supported by the second support member 53. Therefore, the workload on the control device installed in the vehicle 100 can be reduced in the processing performed by the first processor 491 and the first memory 492, as well as in the processing performed by the second processor 591 and the second memory 592.

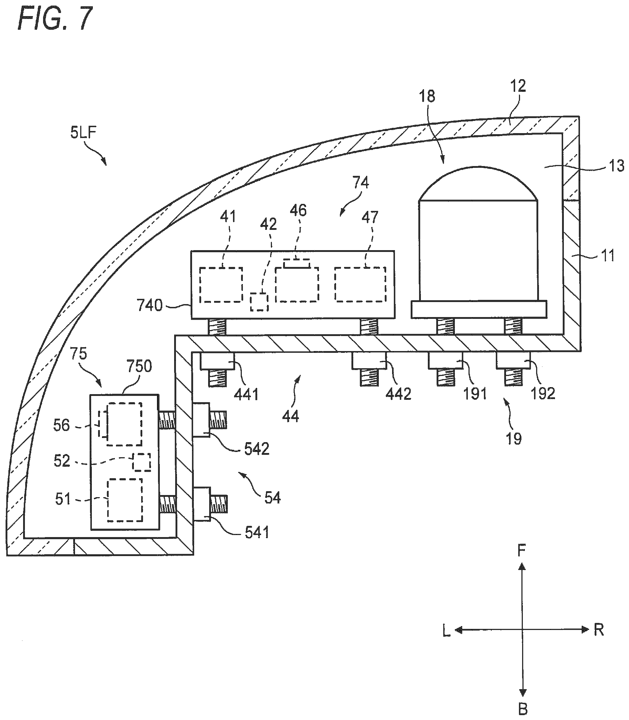

FIG. 7 schematically illustrates a configuration of the left front sensor system 5LF according to a fifth embodiment. Components that are the same as or equivalent to those of the left front sensor system 3LF according to the third embodiment are assigned with the same reference numerals, and repetitive descriptions for those will be omitted.

The left front sensor system 3LF comprises a first sensor module 74. The first sensor module 74 includes the first LiDAR sensor 41, the first acceleration sensor 42, the first screw mechanism 44, the first camera 46, and the millimeter wave radar 47. The first sensor module 74 includes a first support member 740.

The first support member 740 is a single housing or substrate. The first LiDAR sensor 41, the first acceleration sensor 42, the first camera 46, and the millimeter wave radar 47 are provided in the housing or on the substrate. The first accelerometer 42 is disposed between the first LiDAR sensor 41 and the first camera 46. The first screw mechanism 44 is directly or indirectly coupled to the housing or substrate.

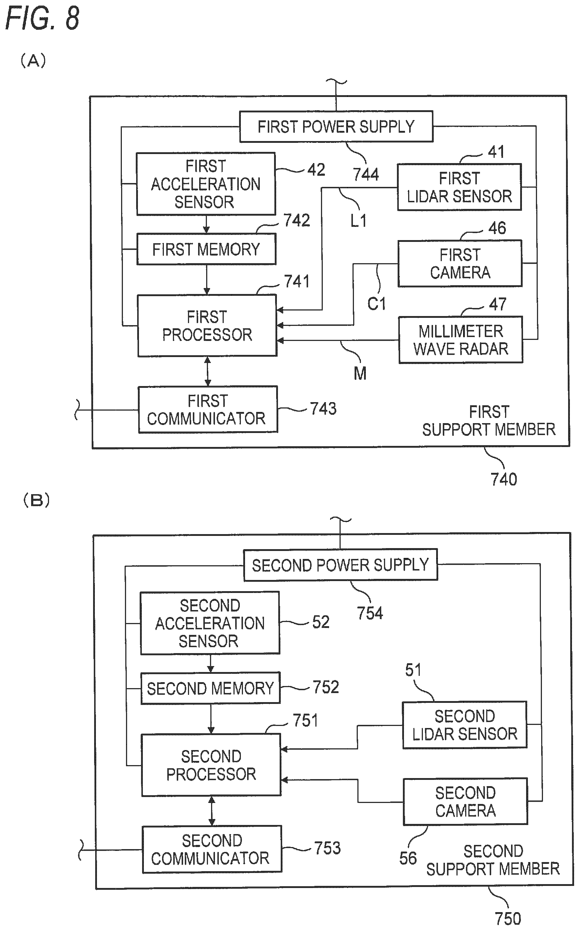

(A) in FIG. 8 illustrates a functional configuration of the first sensor module 74. The first sensor module 74 further includes a first processor 741, a first memory 742, a first communicator 743, and a first power supply 744. The first processor 741, the first memory 742, the first communicator 743, and the first power supply 744 are provided in the housing or on the substrate serving as the first support member 740.
   Examples of the first processor 741 may include a CPU, an MPU, and a GPU. The first processor 741 may include a plurality of processor cores. Examples of the first memory 742 may include a ROM and a RAM. The ROM may store a program for executing the processing described above. The program may include an artificial intelligence program. Examples of the artificial intelligence program may include a learned neural network with deep learning. For example, the first processor 741 may designate at least a part of the program stored in the ROM, load the program on the RAM, and execute the above-described processing in cooperation with the RAM. At least some of the functions of the first processor 741 may be realized by at least one hardware resource different from the first processor 741 and the first memory 742. Examples of such hardware resources may include integrated circuits such as an ASIC and an FPGA.
   The first processor 741 is allowed to communicate with a controller device (not illustrated) installed in the vehicle 100 via the first communicator 743. The first processor 741 is configured to receive a control signal from the control device via the first communicator 743, and to control the operations of the first LiDAR sensor 41, the first camera 46, and the millimeter wave radar 47 based on the control signal.
   The first power supply 744 is configured to receive power from a power source (not illustrated) installed in the vehicle 100, and to supply the power to the first LiDAR sensor 41, the first acceleration sensor 42, the first camera 46, the millimeter wave radar 47, the first processor 741, and the first memory 742.
   The left front sensor system 3LF comprises a second sensor module 75. The second sensor module 75 includes the second LiDAR sensor 51, the second acceleration sensor 52, the second screw mechanism 54, and the second camera 56. The second sensor module 75 includes a second support member 750.
   The second support member 750 is a single housing or substrate. The second LiDAR sensor 51, the second acceleration sensor 52, and the second camera 56 are provided in the housing or on the substrate. The second accelerometer 52 is disposed between the second LiDAR sensor 51 and the second camera 56. The second screw mechanism 54 is directly or indirectly coupled to the housing or substrate.
(B) in FIG. 8 illustrates a functional configuration of the second sensor module 75. The second sensor module 75 further includes a second processor 751, a second memory 752, a second communicator 753, and a second power supply 754. The second processor 751, the second memory 752, the second communicator 753, and the second power supply 754 are provided in the housing or on the substrate serving as the second support member 750.

Examples of the second processor 751 may include a CPU, an MPU, and a GPU. The second processor 751 may include a plurality of processor cores. Examples of the second memory 752 may include a ROM and a RAM. The ROM may store a program for executing the processing described above. The program may include an artificial intelligence program. Examples of the artificial intelligence program may include a learned neural network with deep learning. For example, the second processor 751 may designate at least a part of the program stored in the ROM, load the program on the RAM, and execute the above-described processing in cooperation with the RAM. At least some of the functions of the second processor 751 may be realized by at least one hardware resource different from the second processor 751 and the second memory 752. Examples of such hardware resources may include integrated circuits such as an ASIC and an FPGA.

The second processor 751 is allowed to communicate with a control device (not illustrated) installed in the vehicle 100 via the second communicator 753. The second processor 751 is configured to receive a control signal from the control device via the second communicator 753, and to control the operations of the second LiDAR sensor 51 and the second camera 56 based on the control signal.

The second power supply 754 is configured to receive electric power from a power source (not illustrated) installed in the vehicle 100, and to supply the electric power to the second LiDAR sensor 51, the second acceleration sensor 52, the second camera 56, the second processor 751, and the second memory 752.

A method of installing the left front sensor system 5LF configured as described above in the vehicle 100 will be described.

First, before the left front sensor system 5LF is installed in the vehicle 100, the attitudes of the first sensor module 74 and the second sensor module 75 with respect to the housing 11 are adjusted. Specifically, the first LiDAR sensor 41, the first camera 46, and the millimeter wave radar 47 are adjusted by changing the attitude of the first support member 740 with respect to the housing 11 using the first screw mechanism 44. Similarly, by changing the attitude of the second support member 750 with respect to the housing 11 using the second screw mechanism 54, the sensing reference positions of the second LiDAR sensor 51 and the second camera 56 are adjusted. One time point before the left front sensor system 5LF is installed in the vehicle 100 is an example of the first time point.

The first acceleration sensor 42 outputs a signal A1 (t1) corresponding to the attitude of the first support member 740 that further corresponds to the adjustment result of the sensing reference positions of the first LiDAR sensor 41, the first camera 46, and the millimeter wave radar 47. That is, the signal A1 (t1) corresponds to the output value V11 of the first acceleration sensor 42 before the left front sensor system 5LF is installed in the vehicle 100. The signal A1 (t1) is inputted to the first memory 742. The first memory 742 stores the output value V11 of the first acceleration sensor 42 corresponding to the signal A1 (t1). The output value V11 is an example of a first output value.

The second acceleration sensor 52 outputs a signal A2 (t1) corresponding to the attitude of the second support member 750 that further corresponds to the adjustment result of the sensing reference positions of the second LiDAR sensor 51 and the second camera 56. That is, the signal A2 (t1) corresponds to the output value V21 of the second acceleration sensor 52 before the left front sensor system 5LF is installed in the vehicle 100. The signal A2 (t1) is inputted to the second memory 752. The second memory 752 stores the output value V21 of the second acceleration sensor 52 corresponding to the signal A2 (t1). The output value V21 is an example of the first output value.

Next, the left front sensor system 5LF is installed in the vehicle 100. At this time, the sensing reference positions of the respective sensors may deviate from desired positions due to tolerances of vehicle body components or positional deviation of the left front sensor system 5LF with respect to the vehicle body. Therefore, after the left front sensor system 5LF is installed in the vehicle 100, the sensing reference positions of the respective sensors are readjusted. In other words, at least one of the position and the attitude of the left front sensor system 5LF with respect to the vehicle body of the vehicle 100 is adjusted. One time point after the left front sensor system 5LF is installed in the vehicle 100 is an example of the second time point.

Specifically, the first acceleration sensor 42 outputs a signal A1 (t2) corresponding to the attitude of the first support member 43 that further corresponds to the installed attitude of the left front sensor system 5LF with respect to the vehicle body. That is, the signal A1 (t2) corresponds to the output value V12 of the first acceleration sensor 42 after the left front sensor system 5LF is installed in the vehicle 100. The output value V12 is an example of a second output value.

The first processor 741 acquires the output value V12 of the first acceleration sensor 42. The signal A1 (t2) outputted from the first acceleration sensor 42 may be inputted to the first processor 741 or the first memory 742. In the former case, the first processor 741 directly acquires the output value V12. In the latter case, the first processor 741 acquires the output value V12 via the first memory 742.

The first processor 741 acquires a difference D1 between the output value V12 and the output value V12. The difference D1 reflects the deviation of the sensing reference positions of the first LiDAR sensor 41, the first camera 46, and the millimeter wave radar 47 caused by the installing of the left front sensor system 4LF in the vehicle 100.

In the present embodiment, no mechanism for adjusting the attitudes of the first LiDAR sensor 41, the first camera 46, and the millimeter wave radar 47 is provided. Therefore, when the deviation of the sensing reference positions of the first LiDAR sensor 41, the first camera 46, and the millimeter wave radar 47 is sensed, the attitudes of the first LiDAR sensor 41, the first camera 46, and the millimeter wave radar 47 are not changed so as to cancel the deviation, but the information acquired by the first LiDAR sensor 41, the information acquired by the first camera 46, and the information acquired by the millimeter wave radar 47 are corrected.

Specifically, the first processor 741 corrects the signal L1 outputted from the first LiDAR sensor 41 based on the acquired difference D1 so as to be a signal that would have been acquired if there was no deviation in the sensing reference position of the first LiDAR sensor 41.

Similarly, the first processor 741 corrects the image signal C1 outputted from the first camera 46 based on the acquired difference D1 so as to be a signal that would have been acquired if there was no deviation in the sensing reference position of the first camera 46.

Similarly, the first processor 741 corrects a signal M outputted from the millimeter wave radar 47 based on the acquired difference D1 so as to be a signal that would have been acquired if there was no deviation in the sensing reference position of the millimeter wave radar 47.

As a result, it is possible to acquire substantially the same data as when at least one of the positions and the attitudes of the first LiDAR sensor 41, the first camera 46, and the millimeter wave radar 47 is changed so as to cancel the deviation of the sensing reference positions. That is, it can be said that the first processor 741 indirectly readjusts the sensing reference positions of the first LiDAR sensor 41, the first camera 46, and the millimeter wave radar 47, which are changed by the installing of the left front sensor system 4LF in the vehicle 100.

Similarly, the second acceleration sensor 52 outputs a signal A2 (t2) corresponding to the attitude of the second support member 53 that further corresponds to the installed attitude of the left front sensor system 5LF with respect to the vehicle body. That is, the signal A2 (t2) corresponds to the output value V22 of the second acceleration sensor 52 after the left front sensor system 5LF is installed in the vehicle 100. The output value V22 is an example of the second output value.

The second processor 751 acquires the output value V22 of the second acceleration sensor 52. The signal A2 (t2) outputted from the second acceleration sensor 52 may be inputted to the second processor 751 or the second memory 752. In the former case, the second processor 751 acquires the output value V22 directly. In the latter case, the second processor 751 acquires the output value V22 through the second memory 752.

The second processor 751 acquires a difference D2 between the output value V21 and the output value V22. The difference D2 reflects the deviation of the sensing reference positions of the second LiDAR sensor 51 and the second camera 56 caused by the installing of the left front sensor system 4LF in the vehicle 100.

In the present embodiment, no mechanism for adjusting the attitudes of the second LiDAR sensors 51 and the second camera 56 is provided. Therefore, when the deviation of the sensing reference positions of the second LiDAR sensor 51 and the second camera 56 is sensed, the attitudes of the second LiDAR sensor 51 and the second camera 56 are not changed so as to cancel the deviation, but the information acquired by the second LiDAR sensor 51 and the information acquired by the second camera 56 are corrected.

Specifically, the second processor 751 corrects the signal L2 outputted from the second LiDAR sensor 51 based on the acquired difference D2 so as to be a signal that would have been acquired if there was no deviation in the sensing reference position of the second LiDAR sensor 51.

Similarly, the second processor 751 corrects the image signal C2 outputted from the second camera 56 based on the acquired difference D2 so as to be a signal that would have been acquired if there was no deviation in the sensing reference position of the second camera 56.

As a result, it is possible to acquire substantially the same data as when at least one of the positions and the attitudes of the second LiDAR sensor 51 and the second camera 56 is changed so as to cancel the deviation of the sensing reference position. That is, it can be said that the second processor 751 indirectly readjusts the sensing reference positions of the second LiDAR sensor 51 and the second camera 56 changed by the installing of the left front sensor system 5LF in the vehicle 100.

According to the configuration of the present embodiment, even if there is a deviation in the sensing reference position of each sensor between before and after the left front sensor system 5LF is installed in the vehicle 100, it is possible to automate the adjustment operation to cancel the deviation. Therefore, it is possible to reduce the burden of adjusting the sensing reference positions of the respective sensors after the left front sensor system 5LF is installed in the vehicle 100.

For example, adjustment of the sensing reference positions of the respective sensors before the left front sensor system 5LF is installed in the vehicle 100 may be performed by a manufacturer of the left front sensor system 5LF. On the other hand, the adjustment of the sensing reference position of the respective sensors after the left front sensor system 5LF is installed in the vehicle 100 may be performed, for example, by a manufacturer who assembles the vehicle 100 by using the left front sensor system 5LF as a part. In this case, it is possible to reduce the burden of the latter entity for adjusting the sensing reference positions of the respective LiDAR sensors. The manufacturer of the left front sensor system 5LF is an example of the first entity. The manufacturer assembling the vehicle 100 is an example of the second entity.

Further, according to the configuration of the present embodiment, it is possible to omit the mechanism for adjusting at least one of the position and the attitude of each sensor. Therefore, it is possible to suppress an increase in the size and weight of the left front sensor system 5LF.

According to the configuration of the present embodiment, the first processor 741 and the first memory 742 are supported by the first support member 740. Similarly, the second processor 751 and the second memory 752 are supported by the second support member 750. Therefore, the workload on the control device installed in the vehicle 100 can be reduced in the processing performed by the first processor 741 and the first memory 742, as well as in the processing performed by the second processor 751 and the second memory 752.

The above embodiments are merely illustrative to facilitate an understanding of the presently disclosed subject matter. The configuration according to each of the above embodiments can be appropriately modified or improved without departing from the gist of the presently disclosed subject matter.

The LiDAR sensor, the camera, and the millimeter wave radar are exemplified as the sensors included in the sensor system. However, an ultrasonic sensor may also be employed as the sensor. The ultrasonic sensor is configured to transmit ultrasonic waves (several tens of kHz to several GHz) and to receive reflected waves as a result of the ultrasonic waves being reflected by an object that is present outside the vehicle 100. As required, the ultrasonic sensor may include a scan device that sweeps the non-visible light to change the transmitting direction (i.e., the sensing direction).

The ultrasonic sensor can obtain the distance to the object associated with the reflected wave, for example, based on the time period from the time when the ultrasonic wave is transmitted in a certain direction to the time when the reflected wave is received. Further, by accumulating such distance data in association with the sensing position, it is possible to obtain information as to the shape of the object associated with the reflected wave.

That is, the ultrasonic sensor is a sensor that senses external information of the vehicle 100. The ultrasonic sensor outputs a signal corresponding to an attribute (intensity or the like) of the received reflected wave. The above-mentioned information is obtained by appropriately processing a signal outputted from the ultrasonic sensor by an information processing section. The information processing section may be provided in the sensor system or may be installed in the vehicle 100.

In each of the above-described embodiments, the attitude of the lamp unit 18 is adjusted by the third screw mechanism 19. However, the third screw mechanism 19 can be replaced by a suitable actuator mechanism at least partially housed in the housing 11.

The present application is based on Japanese Patent Application No. 2017-054102 filed on March 21, 2017, the entire contents of which are incorporated herein by reference.

## Claims

1. A sensor module adapted to be installed in a vehicle, comprising:
a sensor configured to sense external information of the vehicle;
a support member supporting the sensor; and
an acceleration sensor supported on the support member.

2. A sensor system adapted to be installed in a vehicle, comprising:
a sensor configured to sense external information of the vehicle;
a support member supporting the sensor;
an acceleration sensor supported on the support member;
a memory configured to store a first output value of the acceleration sensor at a first time point; and
a processor configured to acquire a difference between the first output value and a second output value of the acceleration sensor at a second time point.

3. The sensor system according to claim 2, comprising:
an adjustment mechanism configured to perform adjustment of at least one of a position and an attitude of the sensor,
wherein the processor is configured to cause the adjustment mechanism to perform the adjustment based on the difference.

4. The sensor system according to claim 2, comprising:
a corrector configured to perform correction of the external information acquired by the sensor,
wherein the processor is configured to cause the corrector to perform the correction based on the difference.

5. The sensor system according to any one of claims 2 to 4, comprising:
a housing commonly housing the sensor, the support member, and the acceleration sensor,
wherein the processor is supported by the housing.

6. The sensor system according to claim 5,
wherein the memory and the processor are supported by the housing.

7. The sensor system according to any one of claims 2 to 6, comprising:
a light source;
a light source adjustment mechanism configured to adjust at least one of a position and an attitude of the light source; and
a housing commonly housing the sensor, the support member, the acceleration sensor, the light source, and at least a portion of the light source adjustment mechanism.

8. The sensor system according to any one of claims 2 to 7,
wherein the sensor includes at least one of a LiDAR sensor, an ultrasonic wave sensor, a millimeter wave radar, and a camera.

9. A method of installing the sensor system according to any one of claims 2 to 8 in a vehicle, comprising:
a first step of causing the memory to store the first output value at the first time point that is before the sensor system is installed in the vehicle; and
a second step of causing the processor to acquire the difference between the first output value and the second output value at the second time point that is after the sensor system is installed in the vehicle.

10. The method according to claim 9,
wherein the first step is performed by a first entity, and the second step is performed by a second entity that is different from the first entity.
